# EUROPEAN PATENT APPLICATION

(11) **EP 3 579 616 A1**
(43) Date of publication of application: **11.12.2019**
(21) Application number: 17897350.9
(22) Date of filing: 01.04.2017
(51) Int. Cl.: H04W 36/08, H04W 36/30, H04W 88/04

(54) **SWITCHING METHOD, APPARATUS AND SYSTEM**

(30) Priority: 27.02.2017 CN 201710109483
(71) Applicant: Huawei Technologies Co., Ltd., Longgang District Shenzhen, Guangdong 518129 (CN)
(72) Inventor: YANG, Haorui, Shenzhen, Guangdong 518129 (CN); HE, Yue, Shenzhen, Guangdong 518129 (CN); JIN, Hui, Shenzhen, Guangdong 518129 (CN)
(74) Representative: Maiwald Patent- und Rechtsanwaltsgesellschaft mbH
(86) International application number: PCT/CN2017/079322
(87) International publication number: WO 2018/152931

(57) **Abstract**

Embodiments of this application provide a handover method and system, and a device, to ensure service continuity of a WD when UE is handed over from a 4G network or a future post-4G network to a 3G or 2G network. The method includes: receiving, by a first terminal, a first message sent by a second terminal, where the first message is used to instruct the first terminal to start measurement, the first terminal connects to a first base station by using the second terminal, and the first base station is a base station that currently serves the first terminal and the second terminal; performing, by the first terminal, measurement based on the first message, to obtain a first measurement report; sending, by the first terminal, the first measurement report to the first base station by using the second terminal; receiving, by the first terminal, a second message sent by the first base station by using the second terminal, where the second message carries an identifier of a second base station and is used to instruct the first terminal to directly connect to the second base station; and directly connecting, by the first terminal, to the second base station based on the second message.

## Description

This application claims priority to Chinese Patent Application No. 201710109483.2, filed with the Chinese Patent Office on February, 27, 2017 and entitled "COMMUNICATION METHOD", which is incorporated herein by reference in its entirety.

### TECHNICAL FIELD

This application relates to the field of communications technologies, and in particular, to a handover method and system, and a device.

### BACKGROUND

The smartphone industry has matured, and the market is becoming saturated. The access terminal and data card market have declined, and a wearable device (Wearable Device, WD) is one of future strategic directions of companies.

Currently, high-performance user equipment (User Equipment, UE) exists around most WDs. To improve transmission efficiency of the WD, a requirement for accessing, by the WD, a network by using the UE has been written into a 3rd Generation Partnership Project (3rd Generation Partnership Project, 3GPP) standard. In addition, in the standard, it is specified that a relay service provided by the UE for the WD does not support a 2nd generation (2nd generation, 2G) or 3rd generation (3rd generation, 3G) access technology and network, and can use only a 4th generation (4th generation, 4G) access technology and network and a subsequent evolved access technology and network. Therefore, when the UE cannot continue camping on the 4G network, for example, when the UE is out of a coverage area of the 4G network and therefore needs to be handed over to the 3G or 2G network, or when the UE needs to fall back to the 3G or 2G network to make a voice call, the WD needs to change from accessing a network by using the UE to directly communicating with a network by using an evolved NodeB (evolved NodeB, eNB).

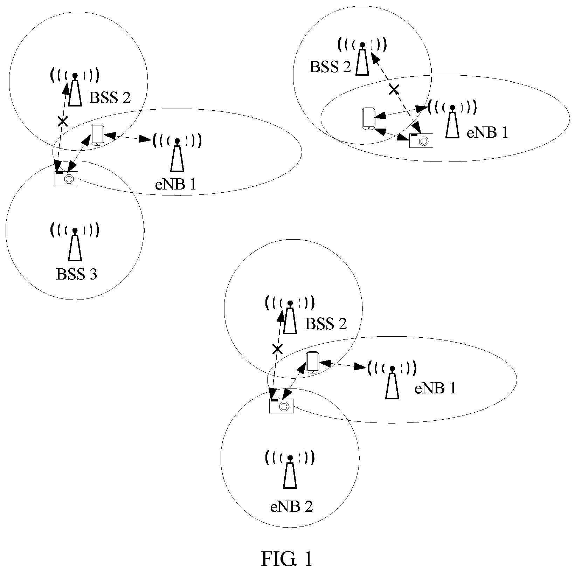

However, when the UE needs to be handed over to the 3G or 2G network, if an eNB still selects, as in the 4G network, a same target base station for the UE and the WD based on a measurement report reported by the UE, to simultaneously hand over the UE and the WD, the WD may fail to camp on the target base station, and consequently service continuity cannot be ensured. For example, as shown in FIG. 1, if an eNB 1 selects a target base station based on measurement report reported by UE, the eNB 1 should select a base station subsystem (base station subsystem, BSS) 2 as a target base station of a WD. However, the WD is far away from the BSS 2, and therefore the WD cannot camp on the target base station. In this case, service continuity cannot be ensured. Actually, it is better to select a BSS 3 (FIG. 1a), the eNB 1 (FIG. lb), or an eNB 2 (FIG. 1c) for the WD.

Therefore, how to ensure service continuity of a WD when UE is handed over from a 4G network or a future post-4G network to a 3G or 2G network is currently a problem to be resolved urgently.

### SUMMARY

Embodiments of this application provide a handover method and system, and a device, to ensure service continuity of a WD when UE is handed over from a 4G network or a future post-4G network to a 3G or 2G network.

To achieve the foregoing objective, the following technical solutions are used in the embodiments of the present invention:

According to a first aspect, a handover method is provided. The method includes: receiving, by a first terminal, a first message sent by a second terminal, where the first message is used to instruct the first terminal to start measurement, the first terminal connects to a first base station by using the second terminal, and the first base station is a base station that currently serves the first terminal and the second terminal; performing, by the first terminal, measurement based on the first message, to obtain a first measurement report; sending, by the first terminal, the first measurement report to the first base station by using the second terminal; receiving, by the first terminal, a second message sent by the first base station by using the second terminal, where the second message carries an identifier of a second base station and is used to instruct the first terminal to directly connect to the second base station; and directly connecting, by the first terminal, to the second base station based on the second message. In other words, when the second terminal is handed over from a 4G network or a future post-4G network to a 3G or 2G network, the first terminal may directly connect to the second base station determined based on the measurement report from the first terminal, to ensure service continuity of the first terminal. This is different from the prior art in which the first base station selects a same target base station for the first terminal and the second terminal based on a measurement report from the second terminal, and consequently the first terminal cannot camp on the target base station, and then a service of the first terminal is interrupted.

In a possible design, before the receiving, by a first terminal, a first message sent by a second terminal, the method further includes: receiving, by the first terminal, a third message sent by the first base station by using the second terminal, where the third message is used to configure a measurement event of the first terminal and instruct the first terminal to start measurement after receiving the first message. Usually, no handover occurs when a signal strength of a serving cell of the second terminal is not less than a second threshold. In this case, the first base station usually selects a same target base station for the first terminal and the second terminal based on a measurement report from the second terminal, even if the first terminal reports a measurement report. Therefore, in this embodiment of this application, after receiving the message that is sent by the first base station and that is used to configure the measurement event of the first terminal, the first terminal does not immediately start measurement, but starts measurement only after receiving the first message used to instruct the first terminal to start measurement. For example, the second terminal sends the first message to the first terminal when the signal strength of the serving cell of the second terminal is less than the second threshold. In this way, signaling overheads of the first terminal are reduced and a quantity of electricity of the first terminal is saved.

In a possible design, the receiving, by a first terminal, a first message sent by a second terminal includes: receiving, by the first terminal, the first message sent by the first base station by using the second terminal, where the first message is used to configure a measurement event of the first terminal. To be specific, in this embodiment of this application, the first terminal starts measurement after receiving the message that is sent by the first base station and that is used to configure the measurement event of the first terminal. This is easier to implement without modifying an existing protocol.

In a possible design, the measurement event of the first terminal includes a first measurement event, the first measurement event includes that a signal strength of a serving cell of the first terminal is greater than a first threshold, the first threshold is a threshold at which access to the serving cell of the first terminal is allowed, and the first measurement event is used to trigger the first terminal to send the first measurement report to the first base station by using the second terminal. In this way, the second base station that is to directly connect to the first terminal and that is determined by the first base station may be the same as the first base station. In other words, the first terminal may directly connect to the first base station.

According to a second aspect, a handover method is provided. The method includes: sending, by a second terminal, a first message to a first terminal, where the first message is used to instruct the first terminal to start measurement, the first terminal connects to a first base station by using the second terminal, and the first base station is a base station that currently serves the first terminal and the second terminal; receiving, by the second terminal, a first measurement report sent by the first terminal; sending, by the second terminal, the first measurement report to the first base station; receiving, by the second terminal, a second message sent by the first base station, where the second message carries an identifier of a second base station and is used to instruct the first terminal to directly connect to the second base station; and sending, by the second terminal, the second message to the first terminal. In other words, when the second terminal is handed over from a 4G network or a future post-4G network to a 3G or 2G network, the first terminal may directly connect to the second base station determined based on the measurement report from the first terminal, to ensure service continuity of the first terminal. This is different from the prior art in which the first base station selects a same target base station for the first terminal and the second terminal based on a measurement report from the second terminal, and consequently the first terminal cannot camp on the target base station, and then a service of the first terminal is interrupted.

In a possible design, before the sending, by a second terminal, a first message to a first terminal, the method further includes: receiving, by the second terminal, a third message sent by the first base station, where the third message is used to configure a measurement event of the first terminal and instruct the first terminal to start measurement after receiving the first message; and sending, by the second terminal, the third message to the first terminal. Usually, no handover occurs when a signal strength of a serving cell of the second terminal is not less than a second threshold. In this case, the first base station usually selects a same target base station for the first terminal and the second terminal based on a measurement report from the second terminal, even if the first terminal reports a measurement report. Therefore, in this embodiment of this application, after receiving the message that is sent by the first base station and that is used to configure the measurement event of the first terminal, the first terminal does not immediately start measurement, but starts measurement only after receiving the first message used to instruct the first terminal to start measurement. For example, the second terminal sends the first message to the first terminal when the signal strength of the serving cell of the second terminal is less than the second threshold. In this way, signaling overheads of the first terminal are reduced and a quantity of electricity of the first terminal is saved.

In a possible design, before the sending, by a second terminal, a first message to a first terminal, the method further includes: receiving, by the second terminal, a fourth message sent by the first base station, where the fourth message is used to configure a second measurement event, and the second measurement event includes that a signal strength of a serving cell of the second terminal is less than a second threshold; and performing, by the second terminal, measurement based on the fourth message, to obtain a second measurement report, where the second measurement report includes the second measurement event. Usually, no handover occurs when a signal strength of a serving cell of the second terminal is not less than a second threshold. In this case, the first base station usually selects a same target base station for the first terminal and the second terminal based on a measurement report from the second terminal, even if the first terminal reports a measurement report. Therefore, in this embodiment of this application, only when the signal strength of the serving cell of the second terminal is less than the second threshold, that is, after the second terminal reports the second measurement report, the first base station sends the first message to the first terminal, where the first message is used to instruct the first terminal to start measurement. In this way, signaling overheads of the first terminal are reduced and a quantity of electricity of the first terminal is saved.

In a possible design, before the sending, by a second terminal, a first message to a first terminal, the method further includes: receiving, by the second terminal, the first message sent by the first base station, where the first message is used to configure a measurement event of the first terminal. To be specific, in this embodiment of this application, the first terminal starts measurement after receiving the message that is sent by the first base station and that is used to configure the measurement event of the first terminal. This is easier to implement without modifying an existing protocol.

In a possible design, before the receiving, by the second terminal, the first message sent by the first base station, the method further includes: receiving, by the second terminal, a fourth message sent by the first base station, where the fourth message is used to configure a second measurement event, and the second measurement event includes that a signal strength of a serving cell is less than a second threshold; and performing, by the second terminal, measurement based on the fourth message, to obtain a second measurement report, where the second measurement report includes the second measurement event, and the second measurement event is used to trigger the second terminal to send the second measurement report to the first base station. Usually, no handover occurs when a signal strength of a serving cell of the second terminal is not less than a second threshold. In this case, the first base station usually selects a same target base station for the first terminal and the second terminal based on a measurement report from the second terminal, even if the first terminal reports a measurement report. Therefore, in this embodiment of this application, only when the signal strength of the serving cell of the second terminal is less than the second threshold, that is, after the second terminal reports the second measurement report, the first base station sends the first message to the first terminal, where the first message is used to instruct the first terminal to start measurement. In this way, signaling overheads of the first terminal are reduced and a quantity of electricity of the first terminal is saved.

In a possible design, the measurement event of the first terminal includes a first measurement event, the first measurement event includes that a signal strength of a serving cell of the first terminal is greater than a first threshold, the first threshold is a threshold at which access to the serving cell of the first terminal is allowed, and the first measurement event is used to trigger the first terminal to send the first measurement report to the first base station by using the second terminal. In this way, the second base station that is to directly connect to the first terminal and that is determined by the first base station may be the same as the first base station. In other words, the first terminal may directly connect to the first base station.

In a possible design, if the second terminal currently is not in a voice call, after the receiving, by the second terminal, a second message sent by the first base station, the method further includes: receiving, by the second terminal, a fifth message sent by the first base station, where the fifth message carries an identifier of a third base station and is used to instruct the second terminal to be handed over from the first base station to the third base station; and handing over the second terminal from the first base station to the third base station based on the fifth message. In this way, because the first terminal is not handed over before the second terminal is handed over, communication in a handover process of the second terminal can be ensured.

According to a third aspect, an embodiment of this application provides a first terminal. The first terminal has a function of implementing behavior of the first terminal in the foregoing method embodiments. The function may be implemented by hardware, or may be implemented by hardware by executing corresponding software. The hardware or software includes one or more modules corresponding to the function.

According to a fourth aspect, an embodiment of this application provides a first terminal, including a processor, a memory, a bus, and a communications interface. The memory is configured to store a computer executable instruction, the processor and the memory are connected by using the bus, and when the first terminal runs, the processor executes the computer executable instruction stored in the memory, so that the first terminal performs the handover method according to any one of the first aspect or the possible designs of the first aspect.

According to a fifth aspect, an embodiment of this application provides a computer readable storage medium, configured to store a computer software instruction to be used by the foregoing first terminal. When the computer software instruction runs on a computer, the computer can perform the handover method according to any one of the first aspect or the possible designs of the first aspect.

According to a sixth aspect, an embodiment of this application provides a computer program product that includes an instruction, and when the instruction runs on a computer, the computer can perform the handover method according to any one of the first aspect or the possible designs of the first aspect.

For technical effects brought by any design manner of the third aspect to the sixth aspect, refer to technical effects brought by different design manners of the first aspect. Details are not described herein again.

According to a seventh aspect, an embodiment of this application provides a second terminal. The second terminal has a function of implementing behavior of the second terminal in the foregoing method embodiments. The function may be implemented by hardware, or may be implemented by hardware by executing corresponding software. The hardware or software includes one or more modules corresponding to the function.

According to an eighth aspect, an embodiment of this application provides a second terminal, including a processor, a memory, a bus, and a communications interface. The memory is configured to store a computer executable instruction, the processor and the memory are connected by using the bus, and when the second terminal runs, the processor executes the computer executable instruction stored in the memory, so that the second terminal performs the handover method according to any one of the second aspect or the possible designs of the second aspect.

According to a ninth aspect, an embodiment of this application provides a computer readable storage medium, configured to store a computer software instruction to be used by the foregoing second terminal. When the computer software instruction runs on a computer, the computer can perform the handover method according to any one of the second aspect or the possible designs of the second aspect.

According to a tenth aspect, an embodiment of this application provides a computer program product that includes an instruction, and when the instruction runs on a computer, the computer can perform the handover method according to any one of the second aspect or the possible designs of the second aspect.

For technical effects brought by any design manner of the seventh aspect to the tenth aspect, refer to technical effects brought by different design manners of the first aspect. Details are not described herein again.

According to an eleventh aspect, an embodiment of this application provides a handover system. The handover system includes the first terminal according to any one of the foregoing aspects and the second terminal according to any one of the foregoing aspects.

These aspects or other aspects of this application are clearer and more comprehensible in description of the following embodiments.

### BRIEF DESCRIPTION OF DRAWINGS

FIG. 1 is a schematic diagram of an existing handover scenario;
FIG. 2 is a schematic architectural diagram of a handover system according to an embodiment of this application;
FIG. 3 is a schematic diagram of a hardware structure of a terminal according to an embodiment of this application;
FIG. 4 is a schematic flowchart 1 of a handover method according to an embodiment of this application;
FIG. 5A and FIG. 5B are a schematic flowchart 2 of a handover method according to an embodiment of this application;
FIG. 6A and FIG. 6B are a schematic flowchart 3 of a handover method according to an embodiment of this application;
FIG. 7 is a schematic structural diagram 1 of a first terminal according to an embodiment of this application;
FIG. 8 is a schematic structural diagram 2 of a first terminal according to an embodiment of this application;
FIG. 9 is a schematic structural diagram 1 of a second terminal according to an embodiment of this application; and
FIG. 10 is a schematic structural diagram 2 of a second terminal according to an embodiment of this application.

### DESCRIPTION OF EMBODIMENTS

The following describes the technical solutions in the embodiments of this application with reference to the accompanying drawings in the embodiments of this application. In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of this application, "a plurality of' means "two or more". In addition, to facilitate clear description of the technical solutions in the embodiments of this application, words such as "first" and "second" are used in the embodiments of this application to distinguish between same items or similar items that have basically the same functions or purposes. A person skilled in the art may understand that the words such as "first" and "second" constitute no limitation on a quantity and an execution order. For example, "first" in a first terminal and "second" in a second terminal in the embodiments of this application are merely used to distinguish between different network devices.

The network architectures and the service scenarios described in the embodiments of this application are intended to describe the technical solutions in the embodiments of this application more clearly, and constitute no limitation on the technical solutions provided in the embodiments of this application. A person of ordinary skill in the art may know that with evolution of the network architectures and emergence of new service scenarios, the technical solutions provided in the embodiments of this application are also applicable to similar technical problems.

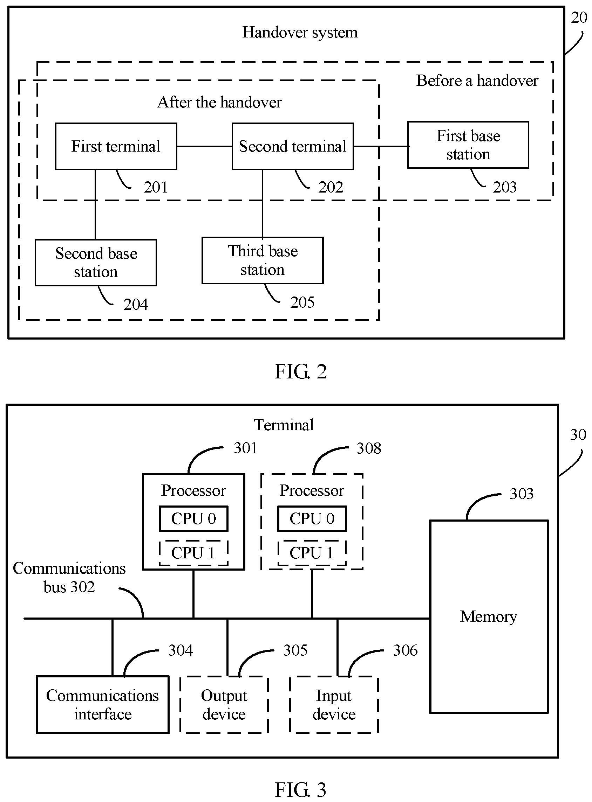

FIG. 2 is a schematic architectural diagram of a handover system according to an embodiment of this application. The handover system 20 includes a first terminal 201, a second terminal 202, a first base station 203, a second base station 204, and a third base station 205. Before a handover, the first terminal 201 accesses a network by using the second terminal 202, to communicate with the first base station. In other words, the first base station 203 serves the first terminal 201 and the second terminal 202. After the handover, the first terminal 201 directly connects to the second base station 204, and the second terminal 202 directly communicates with the third base station 205. In other words, the second base station 204 serves the first terminal 201, and the third base station 205 serves the second terminal 202.

Specifically, in the handover system 20 shown in FIG. 2, the first base station 203 and the second base station 204 may be a same base station, or may be different base stations. This is not specifically limited in this embodiment of this application. The second base station 204 and the third base station 205 may be a same base station, or may be different base stations. This is not specifically limited in this embodiment of this application.

Specifically, in the handover system 20 shown in FIG. 2, the first base station 203 may be an eNB in a current 4G long term evolution (Long Term Evolution, LTE)/evolved packet core (Evolved Packet Core, EPC) network, or may be an eNB in a future 5th generation (5th generation, 5G) network and another future network. This is not specifically limited in this embodiment of this application. The third base station 205 may be a BSS in a current 2G network, or may be a BSS in a current 3G network. This is not specifically limited in this embodiment of this application. The second base station 204 may be a BSS in the current 2G network, a BSS in the current 3G network, an eNB in the current 4G LTE/EPC network, or an eNB in the future 5G network and the another future network. This is not specifically limited in this embodiment of this application.

It should be noted that a terminal and the eNB in the future 5G network and the another future network are merely names, and the names constitute no limitation on devices. In the future 5G network and the another future network, network elements or entities corresponding to the terminal and the eNB may have other names. This is not specifically limited in this embodiment of this application. For example, the terminal may be replaced with a terminal device, and the eNB may be replaced with a base station. This is described herein, and not described below again.

Specifically, in the handover system 20 shown in FIG. 2, a hardware structure of each of the first terminal 201 and the second terminal 202 is shown as a hardware structure of a terminal 30 in FIG. 3. The terminal 30 includes at least one processor 301, a communications bus 302, a memory 303, and at least one communications interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications bus 302 may include a channel, to transfer information between the components.

The communications interface 304 is configured to use any apparatus such as a transceiver to communicate with another device or communications network, such as Ethernet, a radio access network (radio access network, RAN), or a wireless local area network (wireless local area networks, WLAN).

The memory 303 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-Only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, the memory 303 is not limited thereto. The memory may exist independently and connect to the processor by using the bus. The memory may be alternatively integrated with the processor.

The memory 303 is configured to store application program code for executing the solutions in this application, and the processor 301 controls the execution. The processor 301 is configured to execute the application program code stored in the memory 303, to implement the handover method in the embodiments of this application.

During specific implementation, as an embodiment, the processor 301 may include one or more CPUs, for example, a CPU 0 and a CPU 1 in FIG. 3.

During specific implementation, as an embodiment, the terminal 30 may include a plurality of processors, for example, the processor 301 and a processor 308 in FIG. 3. Each of the processors may be a single-core (single-CPU) processor, or may be a multi-core (multi-CPU) processor. The processor herein may be one or more devices, circuits, and/or processing cores configured to process data (such as a computer program instruction).

During specific implementation, as an embodiment, the terminal 30 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode-ray tube (cathode ray tube, CRT) display device, or a projector (projector). The input device 306 communicates with the processor 301, and may receive a user input in a plurality of manners. For example, the input device 306 may be a mouse, a keyboard, a touchscreen device, or a sensing device.

During specific implementation, the terminal 30 may include various handheld devices, vehicle-mounted devices, WDs, or computing devices that have a wireless communications function, or another processing device connected to a wireless modem, and devices having a structure similar to the structure in FIG. 3, such as a terminal, a mobile station (mobile station, MS), UE, a terminal device (terminal equipment), and a soft client that are in various forms. A type of the terminal 30 is not limited in this embodiment of this application. For ease of description, the devices mentioned above are collectively referred to as a terminal in the embodiments of this application.

The handover method provided in the embodiments of this application is described below in detail with reference to the handover system shown in FIG. 2 and the terminal shown in FIG. 3.

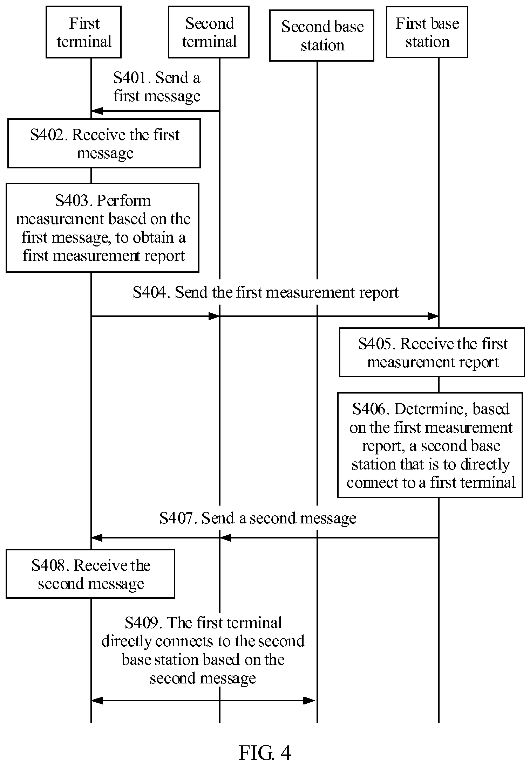

First, FIG. 4 is a schematic flowchart of a handover method according to an embodiment of this application. The handover method relates to interaction between a first terminal, a second terminal, a first base station, and a second base station, and includes the following steps.

S401. The second terminal sends a first message to the first terminal, where the first message is used to instruct the first terminal to start measurement.

As shown in FIG. 1, before a handover, the first terminal connects to the first base station by using the second terminal, and the first base station is a base station that currently serves the first terminal and the second terminal.

For example, in this embodiment of this application, the first terminal may be a WD, and the second terminal may be UE.

S402. The first terminal receives the first message sent by the second terminal.

S403. The first terminal performs measurement based on the first message, to obtain a first measurement report.

Specifically, an object measured by the first terminal based on the first message is determined based on a measurement event of the first terminal that is configured for the first terminal. The measurement event of the first terminal is used to trigger the first terminal to report the first measurement report to the first base station by using the second terminal.

For example, if the measurement event of the first terminal that is configured for the first terminal is that a signal strength of a serving cell of the first terminal is greater than a preset threshold, the first terminal measures the signal strength of the serving cell of the first terminal. When the signal strength of the serving cell of the first terminal is greater than the preset threshold, the first terminal reports the first measurement report to the first base station by using the second terminal.

Alternatively, for example, if the measurement event of the first terminal that is configured for the first terminal is that a signal strength of a neighboring cell of the first terminal is greater than a preset threshold, the first terminal measures the signal strength of the neighboring cell of the first terminal. When the signal strength of the neighboring cell of the first terminal is greater than the preset threshold, the first terminal reports the first measurement report to the first base station by using the second terminal.

The object measured by the first terminal is not specifically limited in this embodiment of this application.

S404. The first terminal sends the first measurement report to the first base station by using the second terminal.

S405. The first base station receives the first measurement report.

S406. The first base station determines, based on the first measurement report, the second base station that is to directly connect to the first terminal.

S407. The first base station sends a second message to the first terminal by using the second terminal, where the second message carries an identifier of the second base station and is used to instruct the first terminal to directly connect to the second base station.

S408. The first terminal receives the second message sent by the first base station by using the second terminal.

S409. The first terminal directly connects to the second base station based on the second message.

In the handover method provided in this embodiment of this application, the first terminal may receive the first message sent by the second terminal, where the first message is used to instruct the first terminal to start measurement; then the first terminal may perform measurement based on the first message, to obtain the first measurement report, where the first measurement report is used to determine the second base station that is to directly connect to the first terminal; and then the first terminal may directly connect to the second base station after the first terminal receives the second message that is sent by the second terminal and that is used to instruct the first terminal to directly connect to the second base station. In other words, when the second terminal is handed over from a 4G network or a future post-4G network to a 3G or 2G network, the first terminal may directly connect to the second base station determined based on the measurement report from the first terminal, to ensure service continuity of the first terminal. This is different from the prior art in which the first base station selects a same target base station for the first terminal and the second terminal based on a measurement report from the second terminal, and consequently the first terminal cannot camp on the target base station, and then a service of the first terminal is interrupted.

The actions of the first terminal in S402, S403, S404, S408, and S409 may be performed by the processor 301 in the terminal 30 shown in FIG. 3 by invoking the application program code stored in the memory 303. This is not limited in this embodiment of this application.

The actions of the second terminal in S401, S404, and S407 may be performed by the processor 301 in the terminal 30 shown in FIG. 3 by invoking the application program code stored in the memory 303. This is not limited in this embodiment of this application.

Then, the handover method shown in FIG. 4 is described in detail.

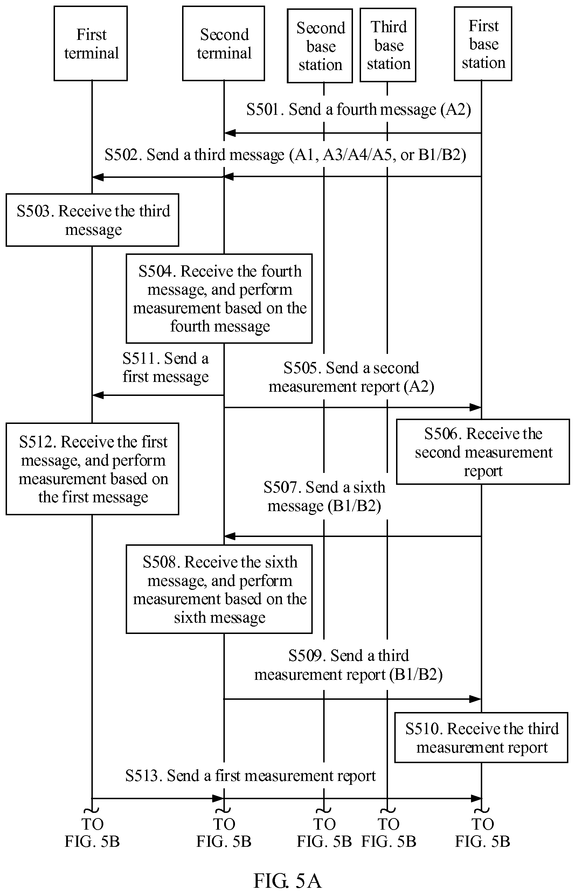

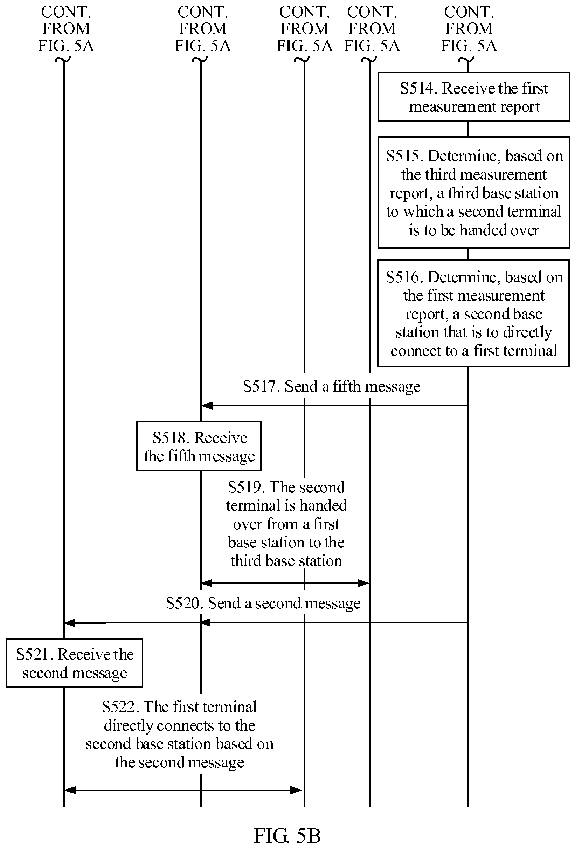

FIG. 5A and FIG. 5B are a schematic flowchart of another handover method according to an embodiment of this application. The handover method relates to interaction between a first terminal, a second terminal, a first base station, a second base station, and a third base station, and includes the following steps.

S501. The first base station sends a fourth message to the second terminal, where the fourth message is used to configure a second measurement event, and the second measurement event includes that a signal strength of a serving cell of the second terminal is less than a second threshold.

Optionally, in this embodiment of this application, the fourth message may be specifically a measurement control (Measurement Control) message. This is not specifically limited in this embodiment of this application.

For ease of description, in this embodiment of this application, the second measurement event is recorded as an A2 event. This is described herein, and not described again below. The A2 event is usually used for inter-frequency measurement.

S502. The first base station sends a third message to the first terminal by using the second terminal, where the third message is used to configure a measurement event of the first terminal and instruct the first terminal to start measurement after receiving a first message, and the first message is used to instruct the first terminal to start measurement.

Optionally, in this embodiment of this application, the third message may be specifically a measurement control (Measurement Control) message. This is not specifically limited in this embodiment of this application.

In this embodiment of this application, the measurement event of the first terminal is used to indicate an object to be measured by the first terminal, and the measurement event of the first terminal is used to trigger the first terminal to report a first measurement report to the first base station by using the second terminal.

Optionally, in this embodiment of this application, the measurement event of the first terminal includes a first measurement event. The first measurement event includes that a signal strength of a serving cell of the first terminal is greater than a first threshold. The first threshold is a threshold at which access to the serving cell of the first terminal is allowed.

For ease of description, in this embodiment of this application, the first measurement event is recorded as an A1 event. This is described herein, and not described again below. The A1 event is usually used to disable ongoing inter-frequency measurement, and the A1 event is used to indicate that the object to be measured by the first terminal is the signal strength of the serving cell of the first terminal. When the signal strength of the serving cell of the first terminal is greater than the first threshold, the first terminal is triggered to report the first measurement report to the first base station by using the second terminal.

Optionally, in this embodiment of this application, the measurement event of the first terminal may further include an A3 event/A4 event/A5 event or a B1 event/B2 event. This is not specifically limited in this embodiment of this application.

The A3 event includes that a signal strength of a neighboring cell with a same priority as a serving cell is greater than a signal strength of the serving cell by a sixth threshold. The A3 event is usually used for a coverage-based intra-frequency/inter-frequency handover, and the A3 event is used to indicate that objects to be measured are the signal strength of the neighboring cell with the same priority as the serving cell and the signal strength of the serving cell. When the signal strength of the neighboring cell with the same priority as the serving cell is greater than the signal strength of the serving cell by the sixth threshold, measurement report reporting is triggered.

The A4 event includes that a signal strength of a neighboring cell is greater than a seventh threshold. The A4 event is usually used for a load-based handover, and the A4 event is used to indicate that an object to be measured is the signal strength of the neighboring cell. When the signal strength of the neighboring cell is greater than the seventh threshold, measurement report reporting is triggered.

The A5 event includes that a signal strength of a serving cell is less than an eighth threshold and a quality of a neighboring cell is greater than a ninth threshold. The A5 event is usually used for a coverage-based intra-frequency/inter-frequency handover, and the A5 event is used to indicate that objects to be measured are the signal strength of the serving cell and the quality of the neighboring cell. When the signal strength of the serving cell is less than the eighth threshold and the quality of the neighboring cell is greater than the ninth threshold, measurement report reporting is triggered.

The B1 event includes that a signal strength of an inter-RAT neighboring cell is greater than a third threshold. The B1 event is usually used for a load-based handover, and the B1 event is used to indicate that an object to be measured is the signal strength of the inter-RAT neighboring cell. When the signal strength of the inter-RAT neighboring cell is greater than the third threshold, measurement report reporting is triggered.

The B2 event includes that a signal strength of a serving cell is less than a fourth threshold and a signal strength of an inter-RAT neighboring cell is greater than a fifth threshold. The B2 event is usually used for a coverage-based handover, and the B2 event is used to indicate that objects to be measured are the signal strength of the serving cell and the signal strength of the inter-RAT neighboring cell. When the signal strength of the serving cell is less than the fourth threshold and the signal strength of the inter-RAT neighboring cell is greater than the fifth threshold, measurement report reporting is triggered.

It should be noted that in this embodiment of this application, steps S501 and S502 are not performed in a definite sequence. Step S501 may be performed before step S502, step S502 may be performed before step S501, or steps S501 and S502 may be simultaneously performed. This is not specifically limited in this embodiment of this application.

S503. The first terminal receives the third message sent by the first base station by using the second terminal.

S504. The second terminal receives the fourth message, and performs measurement based on the fourth message, to obtain a second measurement report, where the second measurement report includes an A2 event.

The fourth message is used to configure the second measurement event, and the second measurement event includes the A2 event. Therefore, an object measured by the second terminal based on the fourth message is the signal strength of the serving cell of the second terminal. When the signal strength of the serving cell of the second terminal is less than the second threshold, the second terminal is triggered to send the second measurement report to the first base station.

S505. The second terminal sends the second measurement report to the first base station.

S506. The first base station receives the second measurement report sent by the second terminal.

S507. The first base station sends a sixth message to the second terminal, where the sixth message is used to configure a third measurement event, and the third measurement event includes a B1 event or a B2 event.

Optionally, in this embodiment of this application, the sixth message may be specifically a measurement control (Measurement Control) message. This is not specifically limited in this embodiment of this application.

S508. The second terminal receives the sixth message, and performs measurement based on the sixth message, to obtain a third measurement report, where the third measurement report includes the third measurement event, and the third measurement report is used to determine the third base station.

The sixth message is used to configure the third measurement event. Therefore, an object measured by the second terminal based on the sixth message is an object corresponding to the third measurement event.

For example, if the third measurement event includes the B1 event, the object measured by the second terminal based on the sixth message is the signal strength of the inter-RAT neighboring cell. When the signal strength of the inter-RAT neighboring cell is greater than the third threshold, the second terminal is triggered to send the third measurement report to the first base station.

Alternatively, for example, if the third measurement event includes the B2 event, the object measured by the second terminal based on the sixth message is the signal strength of the serving cell and the signal strength of the inter-RAT neighboring cell. When the signal strength of the serving cell is less than the fourth threshold and the signal strength of the inter-RAT neighboring cell is greater than the fifth threshold, the second terminal is triggered to send the third measurement report to the first base station.

S509. The second terminal sends the third measurement report to the first base station.

S510. The first base station receives the third measurement report sent by the second terminal.

S511. The second terminal sends the first message to the first terminal, where the first message is used to instruct the first terminal to start measurement.

It should be noted that in this embodiment of this application, steps S505 and S511 are not performed in a definite sequence. Step S505 may be performed before step S511, step S511 may be performed before step S505, or steps S505 and S511 may be simultaneously performed. This is not specifically limited in this embodiment of this application.

S512. The first terminal receives the first message sent by the second terminal, and performs measurement based on the first message, to obtain a first measurement report, where the first measurement report is used to determine the second base station that is to directly connect to the first terminal.

The third message is used to configure the measurement event of the first terminal. Therefore, an object measured by the second terminal based on the first message is an object corresponding to the measurement event of the first terminal.

For example, if the measurement event on a first terminal side includes the A1 event, the object measured by the first terminal based on the first message is the signal strength of the serving cell of the first terminal. When the signal strength of the serving cell of the first terminal is greater than the first threshold, the first terminal is triggered to send the first measurement report to the first base station by using the second terminal.

Alternatively, for example, if the measurement event on a first terminal side includes the A3 event, the object measured by the first terminal based on the first message is the signal strength of the neighboring cell with the same priority as the serving cell and the signal strength of the serving cell. When the signal strength of the neighboring cell with the same priority as the serving cell is greater than the signal strength of the serving cell by the sixth threshold, the first terminal is triggered to send the first measurement report to the first base station by using the second terminal.

Alternatively, for example, if the measurement event on a first terminal side includes the A4 event, the object measured by the first terminal based on the first message is the signal strength of the neighboring cell. When the signal strength of the neighboring cell is greater than the seventh threshold, the first terminal is triggered to send the first measurement report to the first base station by using the second terminal.

Alternatively, for example, if the measurement event on a first terminal side includes the A5 event, the object measured by the first terminal based on the first message is the signal strength of the serving cell and the quality of the neighboring cell. When the signal strength of the serving cell is less than the eighth threshold and the quality of the neighboring cell is greater than the ninth threshold, the first terminal is triggered to send the first measurement report to the first base station by using the second terminal.

Alternatively, for example, if the measurement event on a first terminal side includes the B1 event, the object measured by the first terminal based on the first message is the signal strength of the inter-RAT neighboring cell. When the signal strength of the inter-RAT neighboring cell is greater than the third threshold, the first terminal is triggered to send the first measurement report to the first base station by using the second terminal.

Alternatively, for example, if the measurement event on a first terminal side includes the B2 event, the object measured by the first terminal based on the first message is the signal strength of the serving cell and the signal strength of the inter-RAT neighboring cell. When the signal strength of the serving cell is less than the fourth threshold and the signal strength of the inter-RAT neighboring cell is greater than the fifth threshold, the first terminal is triggered to send the first measurement report to the first base station by using the second terminal.

S513. The first terminal sends the first measurement report to the first base station by using the second terminal.

S514. The first base station receives the third measurement event sent by the second terminal.

S515. The first base station determines, based on the third measurement report, the third base station to which the second terminal is to be handed over.

Specifically, for a specific implementation of determining, by the first base station, the third base station based on the third measurement report, refer to an existing manner. Details are not described herein in this embodiment of this application.

S516. The first base station determines, based on the first measurement report, the second base station that is to directly connect to the first terminal.

For example, if the first measurement report includes the first measurement event, the second base station that is to directly connect to the first terminal and that is determined by the first base station based on the first measurement report may be specifically the first base station.

Alternatively, if the first measurement report includes the A3 event/A4 event/A5 event, the second base station that is to directly connect to the first terminal and that is determined by the first base station based on the first measurement report may be specifically a base station located in a same network as the first base station. For example, if the first base station is a base station in a 4G network, the second base station may be another base station in the 4G network. In other words, this is an intra-network handover. For a specific implementation of determining, by the first base station, the second base station based on the first measurement report, refer to an existing manner. Details are not described herein in this embodiment of this application.

Alternatively, if the first measurement report includes the B1 event/B2 event, the second base station that is to directly connect to the first terminal and that is determined by the first base station based on the first measurement report may be specifically a base station located in a different network from the first base station. For example, if the first base station is a base station in a 4G network, the second base station may be a base station in a 2G or 3G network. In other words, this is an inter-network handover. For a specific implementation of determining, by the first base station, the second base station based on the first measurement report, refer to an existing manner. Details are not described herein in this embodiment of this application.

Optionally, when the second base station is different from the first base station, after the first terminal is handed over, the first base station further deletes content that is related to the first terminal in a context of the second terminal. This is not specifically limited in this embodiment of this application.

S517. The first base station sends a fifth message to the second terminal, where the fifth message carries an identifier of the third base station and is used to instruct the second terminal to be handed over from the first base station to the third base station.

Optionally, in this embodiment of this application, the fifth message may be a radio resource control (radio resource control, RRC) connection reconfiguration message.

Optionally, in this embodiment of this application, the first base station may further instruct the second terminal to stop providing a relay service for the first terminal. This is not specifically limited in this embodiment of this application.

S518. The second terminal receives the fifth message sent by the first base station.

S519. The second terminal is handed over from the first base station to the third base station based on the fifth message.

S520. The first base station sends a second message to the first terminal by using the second terminal, where the second message carries an identifier of the second base station and is used to instruct the first terminal to directly connect to the second base station.

S521. The first terminal receives the second message sent by the first base station by using the second terminal.

S522. The first terminal directly connects to the second base station based on the second message.

Up to now, a procedure of the handover method provided in this embodiment of this application ends.

In this embodiment of this application, when the second terminal is handed over from a 4G network or a future post-4G network to a 3G or 2G network, the first terminal may directly connect to the second base station determined based on the measurement report from the first terminal, to ensure service continuity of the first terminal. This is different from the prior art in which the first base station selects a same target base station for the first terminal and the second terminal based on a measurement report from the second terminal, and consequently the first terminal cannot camp on the target base station, and then a service of the first terminal is interrupted. In addition, usually, no handover occurs when the signal strength of the serving cell of the second terminal is not less than the second threshold. In this case, the first base station usually selects a same target base station for the first terminal and the second terminal based on a measurement report from the second terminal, even if the first terminal reports a measurement report. Therefore, in this embodiment of this application, after receiving the message that is sent by the first base station and that is used to configure the measurement event of the first terminal, the first terminal does not immediately start measurement, but starts measurement only when the signal strength of the serving cell of the second terminal is less than the second threshold, that is, after the second terminal obtains the second measurement report that includes the A2 event. In this way, signaling overheads of the first terminal are reduced and a quantity of electricity of the first terminal is saved.

The actions of the first terminal in steps S503, S512, S513, S521, and S522 may be performed by the processor 301 in the terminal 30 shown in FIG. 3 by invoking the application program code stored in the memory 303. This is not limited in this embodiment of this application.

The actions of the second terminal in steps S502, S504, S511, S505, S508, S513, S518, S519, and S520 may be performed by the processor 301 in the terminal 30 shown in FIG. 3 by invoking the application program code stored in the memory 303. This is not limited in this embodiment of this application.

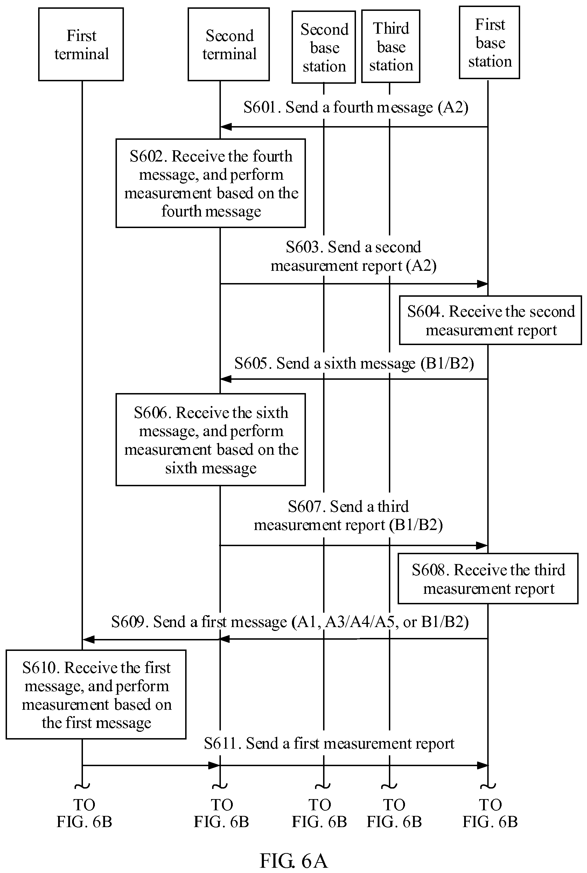

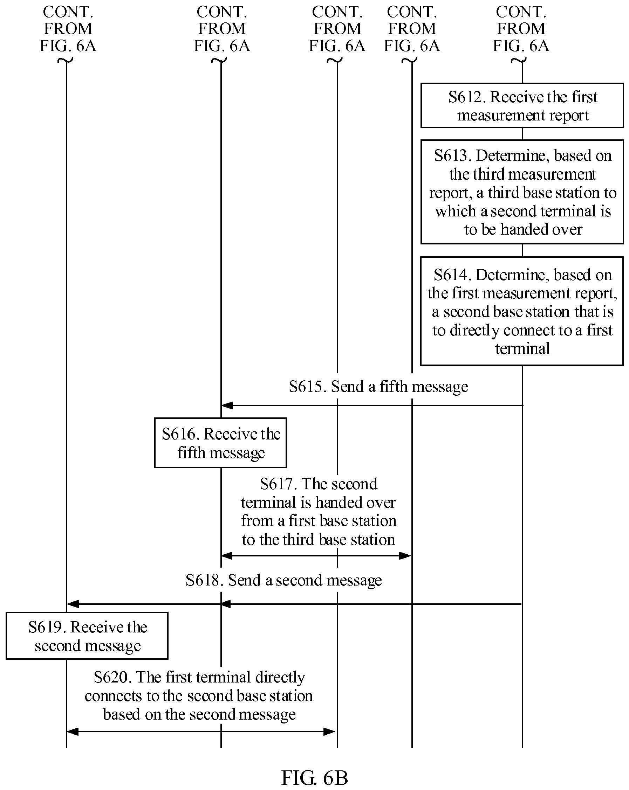

Optionally, FIG. 6A and FIG. 6B are a schematic flowchart of another handover method according to an embodiment of this application. The handover method relates to interaction between a first terminal, a second terminal, a first base station, a second base station, and a third base station, and includes the following steps.

S601 is the same as S501, and therefore details are not described herein again.

S602 to S604 are the same as S504 to S506, and therefore details are not described herein again.

S605 to S608 are the same as S507 to S510, and therefore details are not described herein again.

S609. The first base station sends a first message to the first terminal by using the second terminal, where the first message is used to configure a measurement event of the first terminal.

For related descriptions of the first message and the measurement event of the first terminal, refer to the descriptions of step S502 in the embodiment shown in FIG. 5A and FIG. 5B. Details are not described herein again.

It should be noted that in this embodiment of this application, steps S605 and S609 are not performed in a definite sequence. Step S605 may be performed before step S609, step S609 may be performed before step S605, or steps S605 and S609 may be simultaneously performed. This is not specifically limited in this embodiment of this application.

S610. The first terminal receives the first message sent by the second terminal, and performs measurement based on the first message, to obtain a first measurement report, where the first measurement report is used to determine the second base station that is to directly connect to the first terminal.

For a specific implementation of performing, by the first terminal, measurement based on the first message, refer to the descriptions of step S512 in the embodiment shown in FIG. 5A and FIG. 5B. Details are not described herein again.

S611. The first terminal sends the first measurement report to the first base station by using the second terminal.

S612 to S620 are the same as S514 to S522, and therefore details are not described herein again.

Up to now, a procedure of the handover method provided in this embodiment of this application ends.

In this embodiment of this application, when the second terminal is handed over from a 4G network or a future post-4G network to a 3G or 2G network, the first terminal may directly connect to the second base station determined based on the measurement report from the first terminal, to ensure service continuity of the first terminal. This is different from the prior art in which the first base station selects a same target base station for the first terminal and the second terminal based on a measurement report from the second terminal, and consequently the first terminal cannot camp on the target base station, and then a service of the first terminal is interrupted. In addition, usually, no handover occurs when the signal strength of the serving cell of the second terminal is not less than the second threshold. In this case, the first base station usually selects a same target base station for the first terminal and the second terminal based on a measurement report from the second terminal, even if the first terminal reports a measurement report. Therefore, in this embodiment of this application, only when the signal strength of the serving cell of the second terminal is less than the second threshold, that is, after the second terminal reports the second measurement report that includes the A2 event, the first base station configures the measurement event of the first terminal. In this way, signaling overheads of the first terminal are reduced and a quantity of electricity of the first terminal is saved.

The actions of the first terminal in steps S610, S611, S619, and S620 may be performed by the processor 301 in the terminal 30 shown in FIG. 3 by invoking the application program code stored in the memory 303. This is not limited in this embodiment of this application.

The actions of the second terminal in steps S602, S603, S606, S607, S609, S616, S617, and S618 may be performed by the processor 301 in the terminal 30 shown in FIG. 3 by invoking the application program code stored in the memory 303. This is not limited in this embodiment of this application.

Optionally, in the embodiment shown in FIG. 5A and FIG. 5B or FIG. 6A and FIG. 6B, if the first base station determines that the second terminal currently is not in a voice call, for example, a voice over LTE (Voice over LTE, VoLTE for short) call, the first base station may send the fifth message to the second terminal after determining, based on the first measurement report, the second base station that is to directly connect to the first terminal and sending, to the first terminal, the second message used to instruct the first terminal to directly connect to the second base station, to instruct the second terminal to be handed over from the first base station to the third base station. In this way, because the first terminal is not handed over before the second terminal is handed over, communication in a handover process of the second terminal can be ensured.

The foregoing mainly describes the solutions provided in the embodiments of this application from a perspective of interaction between network elements. It may be understood that to implement the foregoing functions, the first terminal and the second terminal include corresponding hardware structures and/or software modules for performing the functions. A person skilled in the art should be easily aware that in combination with the examples described in the embodiments disclosed in this specification, units and algorithms steps can be implemented in a form of hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In the embodiments of this application, the first terminal and the second terminal may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that in the embodiments of this application, module division is an example and is merely logical function division. During actual implementation, there may be another division manner.

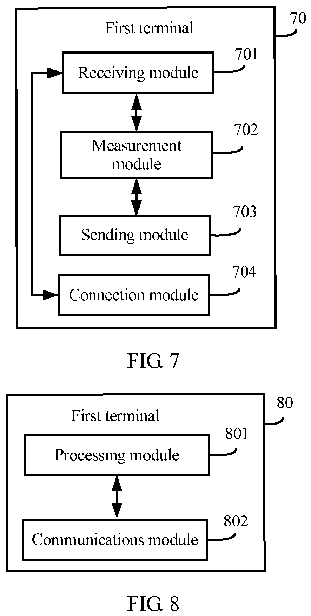

For example, when each function module is obtained through division based on each corresponding function, FIG. 7 is a possible schematic structural diagram of a first terminal 70 related to the foregoing embodiments. The first terminal 70 includes a receiving module 701, a measurement module 702, a sending module 703, and a connection module 704.

The receiving module 701 is configured to support the first terminal 70 in performing steps S402 and S408 in FIG. 4. The measurement module 702 is configured to support the first terminal 70 in performing step S403 in FIG. 4. The sending module 703 is configured to support the first terminal 70 in performing step S404 in FIG. 4. The connection module 704 is configured to support the first terminal 70 in performing step S409 in FIG. 4.

Optionally, the receiving module 701 is configured to support the first terminal 70 in performing step S503, the receiving in step S512, and step S521 in FIG. 5A and FIG. 5B. The measurement module 702 is configured to support the first terminal 70 in performing the measurement in step S512 in FIG. 5A and FIG. 5B. The sending module 703 is configured to support the first terminal 70 in performing step S513 in FIG. 5A and FIG. 5B. The connection module 704 is configured to support the first terminal 70 in performing step S522 in FIG. 5A and FIG. 5B.

Optionally, the receiving module 701 is configured to support the first terminal 70 in performing the receiving in step S610 and step S619 in FIG. 6A and FIG. 6B. The measurement module 702 is configured to support the first terminal 70 in performing the measurement in step S610 in FIG. 6A and FIG. 6B. The sending module 703 is configured to support the first terminal 70 in performing step S611 in FIG. 6A and FIG. 6B. The connection module 704 is configured to support the first terminal 70 in performing step S620 in FIG. 6A and FIG. 6B.

All content related to the steps in the foregoing method embodiments may be cited in function descriptions of corresponding function modules. Details are not described herein again.

When each function module is obtained through division in an integrated manner, FIG. 8 is a possible schematic structural diagram of a first terminal 80 related to the foregoing embodiments. As shown in FIG. 8, the first terminal 80 includes a processing module 801 and a communications module 802. The processing module 801 is configured to perform actions of the measurement module 702 and the connection module 704 in FIG. 7. The communications module 802 is configured to perform actions of the receiving module 701 and the sending module 703 in FIG. 7. For details, refer to the embodiment shown in FIG. 7. Details are not described herein again.

All content related to the steps in the foregoing method embodiments may be cited in function descriptions of corresponding function modules. Details are not described herein again.

In the embodiments of this application, the first terminal is presented in a form in which each function module is obtained through division based on each corresponding function, or the first terminal is presented in a form in which each function module is obtained through division in an integrated manner. The "module" herein may be an application-specific integrated circuit (Application-Specific Integrated Circuit, ASIC), a circuit, a processor that executes one or more software or firmware programs and a memory, an integrated logic circuit, and/or another device that can provide the foregoing functions. In a simple embodiment, a person skilled in the art may figure out that the first terminal 70 or the first terminal 80 may be in the form shown in FIG. 3. For example, the receiving module 701, the measurement module 702, the sending module 703, and the connection module 704 in FIG. 7 may be implemented by the processor 301 and the memory 303 in FIG. 3. Specifically, the receiving module 701, the measurement module 702, the sending module 703, and the connection module 704 may be implemented by the processor 301 by invoking the application program code stored in the memory 303. This is not limited in the embodiments of this application. Alternatively, for example, the processing module 801 and the communications module 802 in FIG. 8 may be implemented by the processor 301 and the memory 303 in FIG. 3. Specifically, the processing module 801 and the communications module 802 may be implemented by the processor 303 by invoking the application program code stored in the memory 301. This is not limited in the embodiments of this application.

The first terminal provided in the embodiments of this application may be configured to perform the foregoing handover method. Therefore, for technical effects that can be achieved by the first terminal, refer to the foregoing method embodiments. Details are not described herein again in the embodiments of this application.

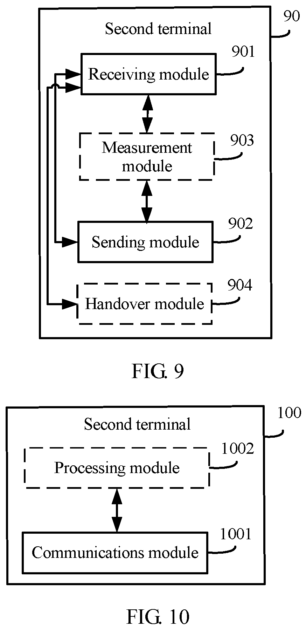

For example, when each function module is obtained through division based on each corresponding function, FIG. 9 is a possible schematic structural diagram of a second terminal 90 related to the foregoing embodiments. The second terminal 90 includes a receiving module 901 and a sending module 902.

The receiving module 901 is configured to receive a first measurement report sent by a first terminal; and the receiving module 901 is configured to receive a second message sent by a first base station, where the second message carries an identifier of a second base station and is used to instruct the first terminal to directly connect to the second base station. The sending module 902 is configured to send a first message to the first terminal, where the first message is used to instruct the first terminal to start measurement; the sending module 902 is configured to send the first measurement report to the first base station; and the sending module 902 is configured to send the second message to the first terminal.

Optionally, as shown in FIG. 9, the second terminal 90 further includes a measurement module 903 and a handover module 904. The receiving module 901 is further configured to support the second terminal 90 in performing the receiving in step S504, the receiving in step S508, and step S518 in FIG. 5A and FIG. 5B. The sending module 902 is further configured to support the second terminal 90 in performing steps S502, S505, S509, S511, S513, and S520 in FIG. 5A and FIG. 5B. The measurement module 903 is further configured to support the second terminal 90 in performing the measurement in step S504 and the measurement in step S508 in FIG. 5A and FIG. 5B. The handover module 904 is further configured to support the second terminal 90 in performing step S519 in FIG. 5A and FIG. 5B.

Optionally, as shown in FIG. 9, the second terminal 90 further includes a measurement module 903 and a handover module 904. The receiving module 901 is further configured to support the second terminal 90 in performing the receiving in step S602, the receiving in step S606, and step S616 in FIG. 6A and FIG. 6B. The sending module 902 is further configured to support the second terminal 90 in performing steps S603, S607, S609, S611, and S618 in FIG. 6A and FIG. 6B. The measurement module 903 is further configured to support the second terminal 90 in performing the measurement in step S602 and the measurement in step S606 in FIG. 6A and FIG. 6B. The handover module 904 is further configured to support the second terminal 90 in performing step S617 in FIG. 6A and FIG. 6B.

All content related to the steps in the foregoing method embodiments may be cited in function descriptions of corresponding function modules. Details are not described herein again.

When each function module is obtained through division in an integrated manner, FIG. 10 is a possible schematic structural diagram of a second terminal 100 related to the foregoing embodiments. As shown in FIG. 10, the second terminal 100 includes a communications module 1001. Optionally, the second terminal 100 includes a processing module 1002. The processing module 1002 is configured to perform actions of the measurement module 903 and the handover module 904 in FIG. 9. The communications module 1001 is configured to perform actions of the receiving module 901 and the sending module 902 in FIG. 9. For details, refer to the embodiment shown in FIG. 9. Details are not described herein again.

All content related to the steps in the foregoing method embodiments may be cited in function descriptions of corresponding function modules. Details are not described herein again.

In the embodiments of this application, the second terminal is presented in a form in which each function module is obtained through division based on each corresponding function, or the second terminal is presented in a form in which each function module is obtained through division in an integrated manner. The "module" herein may be an application-specific integrated circuit (Application-Specific Integrated Circuit, ASIC), a circuit, a processor that executes one or more software or firmware programs and a memory, an integrated logic circuit, and/or another device that can provide the foregoing functions. In a simple embodiment, a person skilled in the art may figure out that the second terminal 90 or the second terminal 100 may be in the form shown in FIG. 3. For example, the receiving module 901, the measurement module 903, the sending module 902, and the handover module 904 in FIG. 9 may be implemented by the processor 301 and the memory 303 in FIG. 3. Specifically, the receiving module 901, the measurement module 903, the sending module 902, and the handover module 904 may be implemented by the processor 301 by invoking the application program code stored in the memory 303. This is not limited in the embodiments of this application. Alternatively, for example, the processing module 1002 and the communications module 1001 in FIG. 10 may be implemented by the processor 301 and the memory 303 in FIG. 3. Specifically, the processing module 1002 and the communications module 1001 may be implemented by the processor 301 by invoking the application program code stored in the memory 303. This is not limited in the embodiments of this application.

The second terminal provided in the embodiments of this application may be configured to perform the foregoing handover method. Therefore, for technical effects that can be achieved by the second terminal, refer to the foregoing method embodiments. Details are not described herein again in the embodiments of this application.

All or some of the foregoing embodiments may be implemented by software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer readable storage medium, or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Although this application is described herein with reference to the embodiments, in a process of implementing this application that claims protection, a person skilled in the art may understand and implement other variations of the disclosed embodiments by viewing the accompanying drawings, the disclosed content, and the appended claims. In the claims, the word "comprising" (comprising) does not exclude another component or step, and "a" or "one" does not exclude a case of "a plurality of'. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, apparently, various modifications and combinations may be made to this application without departing from the spirit and scope of this application. Correspondingly, this specification and the accompanying drawings are merely example descriptions of this application defined by the appended claims, and are considered to cover any one or all of modifications, variations, combinations, or equivalents within the scope of this application. Apparently, a person skilled in the art can make various modifications and variations to this application without departing from the spirit and scope of this application. In this way, this application is also intended to cover these modifications and variations to this application provided that they fall within the scope of the claims of this application and equivalent technologies thereof.

## Claims

1. A handover method, wherein the method comprises:
receiving, by a first terminal, a first message sent by a second terminal, wherein the first message is used to instruct the first terminal to start measurement, the first terminal connects to a first base station by using the second terminal, and the first base station is a base station that currently serves the first terminal and the second terminal;
performing, by the first terminal, measurement based on the first message, to obtain a first measurement report;
sending, by the first terminal, the first measurement report to the first base station by using the second terminal;
receiving, by the first terminal, a second message sent by the first base station by using the second terminal, wherein the second message carries an identifier of the second base station and is used to instruct the first terminal to directly connect to the second base station; and
directly connecting, by the first terminal, to the second base station based on the second message.

2. The method according to claim 1, wherein before the receiving, by a first terminal, a first message sent by the second terminal, the method further comprises:
receiving, by the first terminal, a third message sent by the first base station by using the second terminal, wherein the third message is used to configure a measurement event of the first terminal and instruct the first terminal to start measurement after receiving the first message.

3. The method according to claim 1, wherein the receiving, by a first terminal, a first message sent by a second terminal comprises:
receiving, by the first terminal, the first message sent by the first base station by using the second terminal, wherein the first message is used to configure a measurement event of the first terminal.

4. The method according to claim 2 or 3, wherein the measurement event of the first terminal comprises a first measurement event, the first measurement event comprises that a signal strength of a serving cell of the first terminal is greater than a first threshold, the first threshold is a threshold at which access to the serving cell of the first terminal is allowed, and the first measurement event is used to trigger the first terminal to send the first measurement report to the first base station by using the second terminal.

5. The method according to claim 4, wherein the second base station is the same as the first base station.

6. A handover method, wherein the method comprises:
sending, by a second terminal, a first message to a first terminal, wherein the first message is used to instruct the first terminal to start measurement, the first terminal connects to a first base station by using the second terminal, and the first base station is a base station that currently serves the first terminal and the second terminal;
receiving, by the second terminal, a first measurement report sent by the first terminal;
sending, by the second terminal, the first measurement report to the first base station;
receiving, by the second terminal, a second message sent by the first base station, wherein the second message carries an identifier of the second base station and is used to instruct the first terminal to directly connect to the second base station; and
sending, by the second terminal, the second message to the first terminal.

7. The method according to claim 6, wherein before the sending, by a second terminal, a first message to a first terminal, the method further comprises:
receiving, by the second terminal, a third message sent by the first base station, wherein the third message is used to configure a measurement event of the first terminal and instruct the first terminal to start measurement after receiving the first message; and
sending, by the second terminal, the third message to the first terminal.

8. The method according to claim 7, wherein before the sending, by a second terminal, a first message to a first terminal, the method further comprises:
receiving, by the second terminal, a fourth message sent by the first base station, wherein the fourth message is used to configure a second measurement event, and the second measurement event comprises that a signal strength of a serving cell of the second terminal is less than a second threshold; and
performing, by the second terminal, measurement based on the fourth message, to obtain a second measurement report, wherein the second measurement report comprises the second measurement event.

9. The method according to claim 6, wherein before the sending, by a second terminal, a first message to a first terminal, the method further comprises:
receiving, by the second terminal, the first message sent by the first base station, wherein the first message is used to configure a measurement event of the first terminal.

10. The method according to claim 9, wherein before the receiving, by the second terminal, the first message sent by the first base station, the method further comprises:
receiving, by the second terminal, a fourth message sent by the first base station, wherein the fourth message is used to configure a second measurement event, and the second measurement event comprises that a signal strength of a serving cell is less than a second threshold; and
performing, by the second terminal, measurement based on the fourth message, to obtain a second measurement report, wherein the second measurement report comprises the second measurement event, and the second measurement event is used to trigger the second terminal to send the second measurement report to the first base station.

11. The method according to any one of claims 7 to 10, wherein the measurement event of the first terminal comprises a first measurement event, the first measurement event comprises that a signal strength of a serving cell of the first terminal is greater than a first threshold, the first threshold is a threshold at which access to the serving cell of the first terminal is allowed, and the first measurement event is used to trigger the first terminal to send the first measurement report to the first base station by using the second terminal.

12. The method according to claim 11, wherein the second base station is the same as the first base station.

13. The method according to any one of claims 6 to 12, wherein if the second terminal currently is not in a voice call, after the receiving, by the second terminal, a second message sent by the first base station, the method further comprises:
receiving, by the second terminal, a fifth message sent by the first base station, wherein the fifth message carries an identifier of a third base station and is used to instruct the second terminal to be handed over from the first base station to the third base station; and
handing over the second terminal from the first base station to the third base station based on the fifth message.

14. A first terminal, wherein the first terminal comprises a receiving module, a measurement module, a sending module, and a connection module, wherein
the receiving module is configured to receive a first message sent by a second terminal, wherein the first message is used to instruct the first terminal to start measurement, the first terminal connects to a first base station by using the second terminal, and the first base station is a base station that currently serves the first terminal and the second terminal;
the measurement module is configured to perform measurement based on the first message, to obtain a first measurement report;
the sending module is configured to send the first measurement report to the first base station by using the second terminal;
the receiving module is further configured to receive a second message sent by the first base station by using the second terminal, wherein the second message carries an identifier of the second base station and is used to instruct the first terminal to directly connect to the second base station; and
the connection module is configured to directly connect to the second base station based on the second message.

15. The first terminal according to claim 14, wherein
the receiving module is further configured to: before receiving the first message sent by the second terminal, receive a third message sent by the first base station by using the second terminal, wherein the third message is used to configure a measurement event of the first terminal and instruct the first terminal to start measurement after receiving the first message.

16. The first terminal according to claim 14, wherein the receiving module is specifically configured to:
receive the first message sent by the first base station by using the second terminal, wherein the first message is used to configure a measurement event of the first terminal.

17. The first terminal according to claim 15 or 16, wherein the measurement event of the first terminal comprises a first measurement event, the first measurement event comprises that a signal strength of a serving cell of the first terminal is greater than a first threshold, the first threshold is a threshold at which access to the serving cell of the first terminal is allowed, and the first measurement event is used to trigger the first terminal to send the first measurement report to the first base station by using the second terminal.

18. The first terminal according to claim 17, wherein the second base station is the same as the first base station.

19. A second terminal, wherein the second terminal comprises a sending module and a receiving module, wherein
the sending module is configured to send a first message to a first terminal, wherein the first message is used to instruct the first terminal to start measurement, the first terminal connects to a first base station by using the second terminal, and the first base station is a base station that currently serves the first terminal and the second terminal;
the receiving module is configured to receive a first measurement report sent by the first terminal;
the sending module is further configured to send the first measurement report to the first base station;
the receiving module is further configured to receive a second message sent by the first base station, wherein the second message carries an identifier of the second base station and is used to instruct the first terminal to directly connect to the second base station; and
the second terminal sends the second message to the first terminal.

20. The second terminal according to claim 19, wherein
the receiving module is further configured to: before the sending module sends the first message to the first terminal, receive a third message sent by the first base station, wherein the third message is used to configure a measurement event of the first terminal and instruct the first terminal to start measurement after receiving the first message; and
the sending module is further configured to send the third message to the first terminal.

21. The second terminal according to claim 20, wherein the second terminal further comprises a measurement module;
the receiving module is further configured to: before the sending module sends the first message to the first terminal, receive a fourth message sent by the first base station, wherein the fourth message is used to configure a second measurement event, and the second measurement event comprises that a signal strength of a serving cell of the second terminal is less than a second threshold; and
the measurement module is configured to perform measurement based on the fourth message, to obtain a second measurement report, wherein the second measurement report comprises the second measurement event.

22. The second terminal according to claim 19, wherein
the receiving module is further configured to: before the sending module sends the first message to the first terminal, receive the first message sent by the first base station, wherein the first message is used to configure a measurement event of the first terminal.

23. The second terminal according to claim 22, wherein the second terminal further comprises a measurement module;
the receiving module is further configured to: before receiving the first message sent by the first base station, receive a fourth message sent by the first base station, wherein the fourth message is used to configure a second measurement event, and the second measurement event comprises that a signal strength of a serving cell is less than a second threshold; and
the measurement module is configured to perform measurement based on the fourth message, to obtain a second measurement report, wherein the second measurement report comprises the second measurement event, and the second measurement event is used to trigger the second terminal to send the second measurement report to the first base station.

24. The second terminal according to any one of claims 20 to 23, wherein the measurement event of the first terminal comprises a first measurement event, the first measurement event comprises that a signal strength of a serving cell of the first terminal is greater than a first threshold, the first threshold is a threshold at which access to the serving cell of the first terminal is allowed, and the first measurement event is used to trigger the first terminal to send the first measurement report to the first base station by using the second terminal.

25. The second terminal according to claim 24, wherein the second base station is the same as the first base station.

26. The second terminal according to any one of claims 19 to 25, wherein the second terminal further comprises a handover module;
the receiving module is further configured to: if the second terminal currently is not in a voice call, after receiving the second message sent by the first base station, receive a fifth message sent by the first base station, wherein the fifth message carries an identifier of a third base station and is used to instruct the second terminal to be handed over from the first base station to the third base station; and
the handover module is configured to hand over the second terminal from the first base station to the third base station based on the fifth message.

27. A first terminal, comprising a processor, a memory, a bus, and a communications interface, wherein
the memory is configured to store a computer executable instruction, the processor and the memory are connected by using the bus, and when the first terminal runs, the processor executes the computer executable instruction stored in the memory, so that the first terminal performs the handover method according to any one of claims 1 to 5.

28. A second terminal, comprising a processor, a memory, a bus, and a communications interface, wherein
the memory is configured to store a computer executable instruction, the processor and the memory are connected by using the bus, and when the second terminal runs, the processor executes the computer executable instruction stored in the memory, so that the second terminal performs the handover method according to any one of claims 6 to 13.

29. A handover system, wherein the handover system comprises the first terminal according to any one of claims 14 to 18 and the second terminal according to any one of claims 19 to 26; or
the handover system comprises the first terminal according to claim 27 and the second terminal according to claim 28.
